(19) Europäisches Patentamt

European Patent Office

Office européen des brevets

(11) **EP 0 939 938 B1**

(12) **EUROPÄISCHE PATENTSCHRIFT**

(45) Veröffentlichungstag und Bekanntmachung des Hinweises auf die Patenterteilung:
**08.08.2001 Patentblatt 2001/32**

(21) Anmeldenummer: **97947717.1**

(22) Anmeldetag: **04.11.1997**

(51) Int Cl.[7]: **G06T 7/20**

(86) Internationale Anmeldenummer:
**PCT/DE97/02550**

(87) Internationale Veröffentlichungsnummer:
**WO 98/24060 (04.06.1998 Gazette 1998/22)**

(54) **VERFAHREN UND ANORDNUNG ZUR RECHNERGESTÜTZTEN BEWEGUNGSSCHÄTZUNG ODER BEWEGUNGSKOMPENSATION**

COMPUTER-AIDED MOVEMENT ASSESSMENT OR OFFSETTING, METHOD AND DEVICE

PROCEDE ET DISPOSITIF D'ESTIMATION OU DE COMPENSATION DU MOUVEMENT ASSISTEE PAR ORDINATEUR

(84) Benannte Vertragsstaaten:
**DE FR GB NL SE**

(30) Priorität: **25.11.1996 DE 19648766**

(43) Veröffentlichungstag der Anmeldung:
**08.09.1999 Patentblatt 1999/36**

(73) Patentinhaber: **SIEMENS AKTIENGESELLSCHAFT
80333 München (DE)**

(72) Erfinder: **PANDEL, Jürgen
D-83620 Feldkirchen-Westerham (DE)**

(56) Entgegenhaltungen:
• **MIZUKI M M ET AL: "A BINARY BLOCK MATCHING ARCHITECTURE WITH REDUCED POWER COMSUMPTIONAND SILICON AREA REQUIREMENT" 1996 IEEE INTERNATIONAL CONFERENCE ON ACOUSTICS, SPEECH, AND SIGNAL PROCESSING - PROCEEDINGS. (ICASSP), ATLANTA, MAY 7- 10, 1996, Bd. VOL. 6, Nr. CONF. 21, 7.Mai 1996, INSTITUTE OF ELECTRICAL AND ELECTRONICS ENGINEERS, Seiten 3248-3251, XP000681747**

## Beschreibung

## Technischer Hintergrund

Neuartige Bewegtbildkompressionsverfahren basieren auf einer Zerlegung des Bildinhaltes in sogenannte Bildobjekte mit beliebiger Berandung. Die einzelnen Bildobjekte werden in verschiedenen sogenannten Video-Object-Plains (VOPs) separat codiert, übertragen und im Empfänger decodiert und wieder "zusammengesetzt". Herkömmliche Bildkompressionsverfahren beruhen auf einer Zerlegung des gesamten Bildes in quadratische Bildblöcke. Dieses Prinzip kann auch bei den objektbasierten Verfahren übernommen werden. Probleme entstehen allerdings bei der Codierung der Bildblöcke, die sich an dem Rand des jeweiligen Bildobjektes befinden, da meist die Objektberandung nicht mit den Blockrändern übereinstimmt. Besonders kritisch ist in diesem Zusammenhang eine sogenannte bewegungskompensierte Prädiktion dieser Randblöcke.

Für die Bewegungsschätzung und die Bewegungskompensation gibt es eine Vielzahl unterschiedlicher Suchstrategien. Für blockbasierte Bildkompressionsverfahren wird meist das sogenannte "Block-Matching-Verfahren" eingesetzt. Es beruht darauf, daß der zu codierende Bildblock mit gleich großen Blöcken eines Referenzbildes verglichen wird. Einer der Referenzbildblöcke befindet sich auf der gleichen Position wie der zu codierende Bildblock, die anderen Referenzbildblöcke sind gegenüber diesem örtlich verschoben. Bei einem großen Suchbereich in horizontaler und vertikaler Richtung ergeben sich somit sehr viele Suchpositionen, so daß bei einer sogenannten vollständigen Suche ("Full-Search") auch entsprechend viele Blockvergleiche ("Matchings") durchgeführt werden müssen. Als Kriterium für die Übereinstimmungsgüte zwischen dem jeweils zu codierenden Block und dem Referenzblock wird üblicherweise die Summe der absoluten Differenzen der Codierungsinformation, die jeweils jedem Bildpunkt zugeordnet wird, verwendet.

Unter Codierungsinformation ist im Rahmen dieses Dokumentes beispielsweise die Luminanzinformation, mit der jeweils ein Luminanzwert beschrieben wird, den ein Bildpunkt aufweist, oder auch eine Farbinformation, d. h. der dem jeweiligen Bildpunkt zugeordnete Chrominanzwert, zu verstehen.

In [1] ist ein Verfahren zur pixelweisen Bewegungsschätzung beschrieben, bei dem Konturinformation eines Bildobjekts im Rahmen einer auf sog. "Feature Points" basierenden Bewegungsschätzung erfolgt.

Aus [2] ist ein hierarchisch orientieres Verfahren zur Bewegungsschätzung bekannt, bei dem die Bewegungschätzung iterativ auf Bildsegmente verschiedener Größe erfolgt.

## Kurzbeschreibung der Erfindung

Der Erfindung liegt das Problem zugrunde, ein Verfahren zur rechnergestützten Bewegungsschätzung oder Bewegungskompensation anzugeben, welches die Nachteile der bekannten Verfahren vermindert.

Das Problem wird durch das Verfahren gemäß Patentanspruch 1 gelöst.

Bei dem Verfahren zur rechnergestützten Bewegungsschätzung oder Bewegungskompensation wird bei der Bewegungsschätzung bzw. bei der Bewegungskompensation in einem digitalisierten Originalbild ein digitalisiertes Referenzbild verwendet. Sowohl das Originalbild als auch das Referenzbild weisen jeweils eine beliebige Anzahl von Bildblöcken mit jeweils einer beliebigen Anzahl von Bildpunkten auf. Ferner weisen das Originalbild und das Referenzbild jeweils mindestens ein Bildobjekt auf, wobei die Bildobjekte eine beliebige Form und eine beliebige Anzahl von Bildpunkten aufweisen. Die Form der Bildobjekte wird jeweils unter Verwendung einer Konturinformation beschrieben. Die Bewegungsschätzung bzw. Bewegungskompensation für den Originalbildblock erfolgt bezüglich mindestens eines Referenzbildblocks, wobei bei der Bewegungsschätzung bzw. bei der Bewegungskompensation die Konturinformation zur Beschreibung der Form der Bildobjekte berücksichtigt wird.

Ein erheblicher Vorteil dieses Verfahrens ist darin zu sehen, daß auch Rotationsbewegungen von Bildobjekten bei der Bewegungsschätzung bzw. bei der Bewegungskompensation mit erfaßt werden können, ohne daß zusätzliche Information bezüglich der Rotationsbewegung der Bildobjekte übertragen werden muß.

Dieser Vorteil ist ebenso gegeben bei der Anordnung zur Durchführung dieses Verfahrens, die eine Prozessoreinheit zur Durchführung der einzelnen Verfahrensschritte sowie einen Bildspeicher zur Speicherung von Bilddaten aufweist.

Vorteilhafte Weiterbildungen der Erfindung ergeben sich aus den abhängigen Ansprüchen.

Es ist vorteilhaft, für mindestens einen Originalbildblock, der zumindest einen Teil einer Objektkante des Bildobjekts aufweist, für den Teil der Objektkante eine Kantenlänge in dem Originalbildblock zu ermitteln. In dem Referenzbild wird mindestens eine Suchposition bestimmt und in dem Referenzbild wird ein Teil einer Objektkante der zuvor bestimmten Kantenlänge in dem Referenzbildblock bestimmt, wobei die Suchposition in dem Teil der Objektkante in dem Referenzbildblock enthalten ist. Aus der unterschiedlichen Orientierung der Objektkante in dem Referenzbildblock und der Objektkante in dem Originalbildblock wird eine relative Orientierung ermittelt und der Referenzbildblock wird auf dem Originalbildblock abgebildet, wobei der Referenzbildblock um die relative Orientierung gedreht wird. Die Abbildung erfolgt derart, daß Codierungsinformation von Bildpunkten des Originalbildblocks auf Codierungsinformation von Bildpunkten des Referenzbildblocks abgebildet wird.

Durch diese Vorgehensweise wird erreicht, daß auf eine sehr einfache Weise die Rotationsbewegung des Bildobjektes ermittelt und im Rahmen der Verfahren zur Bewegungsschätzung bzw. Bewegungskompensation berücksichtigt werden kann.

Ferner ist es in einer Weiterbildung vorteilhaft, daß die Objektkante in dem Originalbild und die Objektkante in dem Referenzbild in etwa die gleiche Form aufweisen. Durch diese Weiterbildung wird der erforderliche Rechenaufwand zur Durchführung des Verfahrens erheblich vermindert.

Weiterhin ist es vorteilhaft, die Abbildung der Codierungsinformation derart durchzuführen, daß bei der Abbildung die Objektkanten in etwa deckungsgleich sind, wodurch die Genauigkeit der Bewegungsschätzung erheblich erhöht wird.

Auch ist es zur Reduktion des Rechenzeitbedarfs zur Durchführung des Verfahrens vorteilhaft, die Objektkanten jeweils durch eine Kantenapproximationsfunktion anzunähern.

Ferner ist es vorteilhaft, das Verfahren für mehrere Referenzbildblöcke durchzuführen, jeweils eine Blockdifferenz zwischen der abgebildeten Codierungsinformation und der Codierungsinformation des Originalbildblockes zu ermitteln und denjenigen Referenzbildblock auszuwählen, der eine optimale Blockdifferenz bezüglich eines vorgebbaren Bewertungskriteriums aufweist. Ferner wird eine Reduktion des Codierungsaufwandes dadurch erreicht, daß Codierungsinformation von Bildpunkten, die sich nicht in dem Bildobjekt befinden, ein vorgebbarer Wert zugeordnet wird. Durch diese Vorgehensweise wird die Anzahl der Codierungstransformationskoeffizienten erheblich reduziert und somit auch die benötigte Übertragungskapazität bei der Übertragung der Bildinformation.

Weiterhin ist es vorteilhaft, nur einen Suchbereich vorgebbarer Größe im Rahmen der Bewegungsschätzung zu verwenden. Dies führt zu einer erheblichen Rechenzeiteinsparung bei der Durchführung des Verfahrens mit einem Rechner.

Weiterhin ist es vorteilhaft, als Suchbereich im wesentlichen die Objektkante des Bildobjekts in dem Referenzbild zu verwenden, wodurch eine weitere Einschränkung des Suchbereichs und somit eine erhebliche weitere Einsparung an benötigter Rechenzeit erreicht wird.

Das Verfahren zur Bewegungsschätzung kann vorteilhaft sowohl bei der Bildcodierung als auch bei der Bilddecodierung verwendet werden.

**Kurzbeschreibung der Figuren**

In den Fig. ist ein Ausführungsbeispiel der Erfindung dargestellt, welches im weiteren näher erläutert wird.

Es zeigen

Fig. 1 eine Skizze, in der eine Kamera sowie zwei Anordnungen, mit denen das Verfahren zur Bewegungsschätzung und eine Bewegtbildcodierung durchgeführt wird, dargestellt sind;

Fig. 2 eine Skizze eines Differenzbildes mit einer Darstellung eines Teils eines Bildobjekts im Referenzbild;

Fig. 3 eine Skizze, in der ein Originalbild mit einem Bildblock, einem Bildobjekt und einer Approximationsfunktion der Objektkante des Bildobjekts dargestellt ist;

Fig. 4 eine Skizze, in der die Abbildung des Originalbildblocks, gedreht um die relative Orientierung, abgebildet auf das Referenzbild, dargestellt ist;

Fig. 5 eine Skizze eines Bildblocks, in der die Vorgehensweise zur Behandlung von Bildpunkten, die nicht sowohl in dem Referenzbildblock als auch in dem Originalbildblock enthalten sind, dargestellt ist;

Fig. 6 eine Skizze, in der eine Einschränkung des Suchbereichs entlang einer Objektkante beschrieben ist;

Fig. 7 eine Skizze, in der die Verwendung einer variablen Breite des Suchbereichs entlang einer Objektkante skizziert ist.

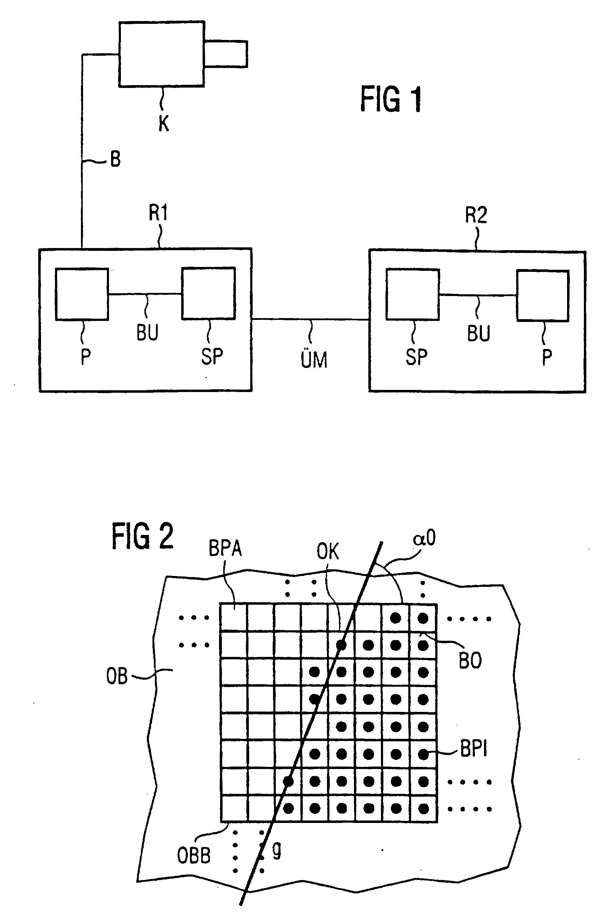

In Fig. 1 ist eine Kamera K dargestellt, mit der Bilder aufgenommen werden. Die Kamera K kann beispielsweise eine beliebige analoge Kamera K sein, die Bilder einer Szene aufnimmt und diese Bilder entweder in der Kamera K digitalisiert oder auch analog zu einem ersten Rechner R1 überträgt, in dem dann entweder die digitalisierten Bilder verarbeitet werden oder die analogen Bilder zu digitalisierten Bildern umgewandelt werden und die digitalisierten Bilder verarbeitet werden.

Die Kamera K kann jedoch auch eine digitale Kamera K sein, mit der direkt digitalisierte Bilder B aufgenommen und dem ersten Rechner R1 zur Weiterverarbeitung zugeführt werden.

Der erste Rechner R1, der beispielsweise auch als eine eigenständige Anordnung, die die im weiteren beschriebenen Verfahrensschritte durchführt, ausgestaltet sein kann, beispielsweise als eine eigenständige Computerkarte, die in einem Rechner installiert ist. Der erste Rechner R1 weist eine Prozessoreinheit P auf, mit der die im weiteren beschriebenen Verfahrensschritte der Bewegungsschätzung oder der Bewegungskompensation sowie eventuell weitere Verfahrensschritte beispielsweise zur Bildcodierung durchgeführt werden. Die Prozessoreinheit P ist beispielsweise über einen Bus BU mit einem Speicher SP, in dem die Bilddaten gespeichert werden, gekoppelt.

Das Verfahren zur Bewegungsschätzung oder Bewegungskompensation kann sowohl zur Bildcodierung als auch zur Bilddecodierung vorteilhaft eingesetzt werden.

Es ist beispielsweise vorgesehen, in dem ersten Rechner R1 die Bildcodierung vorzunehmen und nach Übertragung der komprimierten Bilddaten über ein Übertragungsmedium ÜM zu einem zweiten Rechner R2 in dem zweiten Rechner R2 die Bilddecodierung durchzuführen. Der zweite Rechner R2 weist beispielsweise den gleichen prinzipiellen Aufbau auf wie der erste Rechner R1, also den Speicher SP, der über dem Bus BU mit der Prozessoreinheit P gekoppelt ist.

Neuartige Bewegtbildkompressionsverfahren, beispielsweise dem Verfahren nach dem MPEG4-Standard, basieren auf einer Zerlegung des Bildinhaltes des digitalisierten Bildes B, welches eine beliebige Anzahl von Bildpunkten BP aufweist, in eine beliebige Anzahl von Bildobjekten BO.

Ein Bildobjekt BO (vgl. Figur 2) weist eine beliebige Berandung, die im weiteren als Objektkante OK bezeichnet wird mit einer beliebigen Anzahl von Bildpunkten BP auf. Bei den sogenannten objektbasierten Bildcodierungsverfahren werden die einzelnen Bildobjekte BO in verschiedenen sogenannten Video Object Planes (VOPs) separat codiert, übertragen und im Empfänger, dem weiteren Rechner R2, wieder decodiert und zu einem rekonstruierten Bild rekonstruiert.

Herkömmliche Bewegtbildkompressionsverfahren beruhen auf einer Zerlegung des gesamten Bildes B in üblicherweise quadratische Bildblöcke BB.

Im Rahmen der üblichen sogenannten Hybridcodierung findet die Bewegungsschätzung bzw. Bewegungskompensation zur Reduktion der zeitlichen Redundanz der Bildinformation in zeitlich aufeinanderfolgenden digitalisierten Bildern B Verwendung.

Es wird ausgehend von einem Referenzbild RB jeweils für einen Originalbildblock OBB eines zu codierenden bzw. zu decodierenden Originalbildes OB ein Block Matching Verfahren bezüglich codierter Referenzbildblöcke RBB des Referenzbildes RB durchgeführt.

Das Block Matching verwendet als Kriterium für die Übereinstimmungsgüte zwischen dem Originalbildblock OBB und dem Referenzbildblock RBB üblicherweise die Summe der absoluten Differenzen der Codierungsinformation oder auch die Summe der Quadrate der Differenzen der einzelnen Codierungsinformation der Bildpunkte BP.

Problematisch wird die Bewegungsschätzung bzw. die Bewegungskompensation nach dem Block Matching Prinzip in dem Fall, wenn, wie es bei der objektbasierten Bildcodierung der Fall ist, ein Bildblock BB nur zum Teil durch ein Bildobjekt BO bedeckt ist. Dies führt zu sehr schlechten Ergebnissen der üblichen Verfahren zur Bewegungsschätzung bei der Anwendung bei objektbasierten Bildcodierungsverfahren, in denen auch Verfahren der blockbasierten Bildcodierung eingesetzt werden.

Zur Lösung dieses Problems wird bei dem erfindungsgemäßen Verfahren die Bewegungsschätzung bzw. die Bewegungskompensation für den Originalbildblock OBB bezüglich Referenzbildblöcken RBB derart durchgeführt, daß die Semantik der Bilder B bei der Bewegungsschätzung bzw. bei der Bewegungskompensation berücksichtigt wird. Dies geschieht dadurch, daß eine ohnehin zur Beschreibung der Form des mindestens einen Bildobjekts BO, welches jeweils sowohl in dem Originalbild OB als auch in dem Referenzbild RB enthalten ist, bei objektbasierter Bildcodierung enthaltene Konturinformation zur Bildcodierung verwendet wird. Die Konturinformation wird bei der Bewegungsschätzung bzw. bei der Bewegungskompensation berücksichtigt.

Die Berücksichtigung der Semantik des Bildes B bei der Bewegungsschätzung weist mehrere erhebliche Vorteile auf, die im weiteren näher erläutert werden.

Das Verfahren wird im weiteren zur einfacheren Darstellung anhand eines Originalbildblocks OBB, welcher in Fig. 2 dargestellt ist, erläutert.

Der Originalbildblock OBB, der im Originalbild OB enthalten ist, weist mindestens einen Teil des Bildobjekts BO auf. Ferner weist der Originalbildblock OBB eine Objektkante OK auf, mit der der Bereich des Bildobjekts BO und ein Bereich, der nicht zu dem Bildobjekt BO gehört, getrennt wird. Bildpunkte BPI, die sich innerhalb des Bildobjekts BO befinden, sind in Fig. 2 mit einem schwarzen Punkt markiert. Bildpunkte BPA, die sich außerhalb des Bildobjekts BO befinden, weisen keinen schwarzen Punkt auf.

In diesem Beispiel weist der Originalbildblock OBB 8 x 8 Bildpunkte BP auf. Dies schränkt jedoch die Allgemeingültigkeit des erfindungsgemäßen Verfahrens in keinster Weise ein. Allgemein kann ein Bildblock BB und somit auch der Originalbildblock OBB eine beliebige Anzahl von Bildpunkten BP aufweisen.

In einer konkreten Ausgestaltung der Erfindung wird beispielsweise für mindestens einen Originalbildblock OBB eine Kantenlänge L der Objektkante OK in dem Originalbildblock OBB ermittelt.

Zur Vereinfachung des Verfahrens ist es in einer Weiterbildung vorgesehen, anstelle des genauen Verlaufs der Objektkante OK im weiteren Verfahren eine Kantenapproximationsfunktion g, mit der der Kantenverlauf der Objektkante OK angenähert wird, zu verwenden. Durch diese Weiterbildung wird eine erhebliche Rechenzeiteinsparung bei der Durchführung des Verfahrens erreicht. Im einfachsten Fall weist die Kantenapproximationsfunktion g einen Verlauf in Form einer Gerade auf, für die in dieser Weiterbildung dann die Kantenlänge L ermittelt wird. Es ist jedoch auch eine beliebige andere Kantenapproximationsfunktion g beispielsweise eines höheren polynomialen Grades im Rahmen dieses Verfahrens einsetzbar.

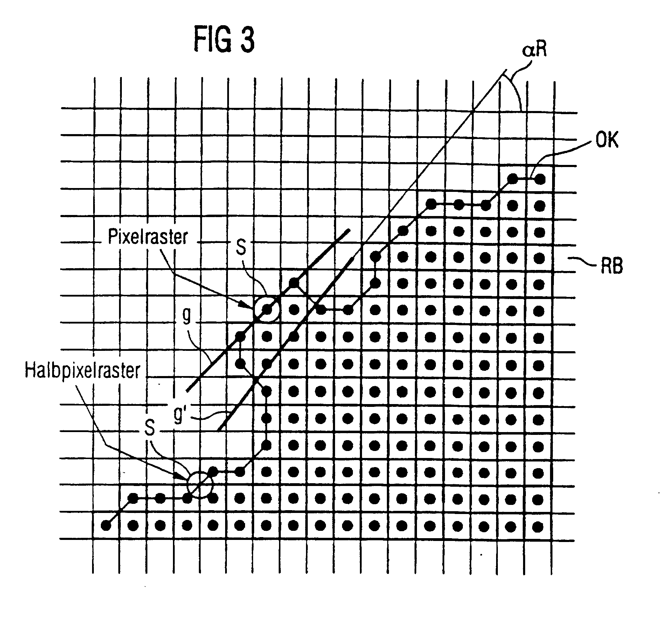

In dem Referenzbild RB (vgl. Fig. 3) wird mindestens eine Suchposition S bestimmt. Allgemein können eine beliebige Anzahl von Suchpositionen S bestimmt werden, wobei es sich als zweckmäßig erwiesen hat, Abstände der Suchpositionen S im Bildpunktraster oder im halben Bildpunktraster zu verwenden. Diese Vorgehensweise dient, wie im weiteren erläutert wird, zur Ermittlung eines geeigneten Referenzbildblocks RBB im Referenzbild RB für die Bewegungsschätzung bzw. für die Bewegungskompensation.

In dem Referenzbild RB wird der Teil der Objektkante OK der zuvor ermittelten Kantenlänge L "in das Referenzbild eingesetzt". Dies erfolgt derart, daß mindestens eine Suchposition S sich auf dem Teil der Objektkante OK befindet. Bei der Weiterbildung, bei der eine Approximationsgerade g, wie in Fig. 2 dargestellt, verwendet wird, wird die Approximationsfunktion g in Form der Strecke mit der Kantenlänge L in das Referenzbild eingesetzt.

Es ist beispielsweise möglich, daß sich die Suchposition S jeweils in etwa in der Mitte, am Anfang, oder auch am Ende der Approximationsfunktion g befindet.

Die Approximationsfunktion g weist eine erste Orientierung $\alpha_O$ bezüglich des Bildblocks OBB auf. Die Approximationsfunktion g in dem Referenzbild RB in der jeweiligen Suchposition S weist eine zweite Orientierung $\alpha_R$ auf. Die zweite Orientierung $\alpha_R$ der Approximationsfunktion g in dem Referenzbild RB ergibt sich beispielsweise daraus, daß das bekannte Verfahren zur Ermittlung der Approximationsfunktion g ebenfalls verwendet wird.

In einer Weiterbildung des Verfahrens kann die Lage und die Position der Approximationsfunktion g mit der Kantenlänge L, ausgehend von der Suchposition S unter Verwendung eines iterativen Verfahrens verändert werden. Dies erfolgt beispielsweise durch iterative Drehung und Verschiebung der Approximationsgeraden g entlang der Normalen der Approximationsgeraden g und z. B. durch Berücksichtigung des quadratischen oder absoluten Fehlers der Differenzen der Codierungsinformation.

Es kann allgemein jedes beliebige Verfahren zur Ermittlung der Approximationsfunktion g und zur Änderung der Lage und der Position der Approximationsfunktion g verwendet werden. Es sollte jedoch sowohl zur Bildcodierung als auch zur Bilddecodierung das gleiche Verfahren verwendet werden, um eine korrekte Rekonstruktion des Bildes B zu gewährleisten.

In Fig. 3 ist eine verschobene und gedrehte Approximationsfunktion g' dargestellt, die die zweite Orientierung $\alpha_R$ aufweist.

In einem weiteren Schritt wird aus der ersten Orientierung $\alpha_O$ und der zweiten Orientierung $\alpha_R$ eine relative Orientierung $\Delta\alpha$ ermittelt, beispielsweise durch Differenzbildung der ersten Orientierung $\alpha_O$ und der zweiten Orientierung $\alpha_R$ ($\Delta\alpha = \alpha_O - \alpha_R$).

In einem weiteren Schritt wird ein Bildblock von der Größe des Originalbildblockes OBB zur Ermittlung eines Referenzbildblockes RBB auf das Referenzbild RB abgebildet, wobei der Bildblock um die relative Orientierung $\Delta\alpha$ gedreht wird. Dem Bildblock wird zunächst eine Objektkante zugeordnet, deren Lage und Orientierung identisch ist mit der Objektkante OK des Originalbildblockes OBB.

In einer Weiterbildung des Verfahrens ist es bei dieser Abbildung vorteilhaft, daß die Objektkante OK des Originalbilds OB und die Objektkante OK des Referenzbilds RB bei der Abbildung in etwa deckungsgleich sind.

In einer Weiterbildung des Verfahrens ist es vorgesehen, anstelle der Objektkante OK jeweils die Approximationsfunktion g zu verwenden.

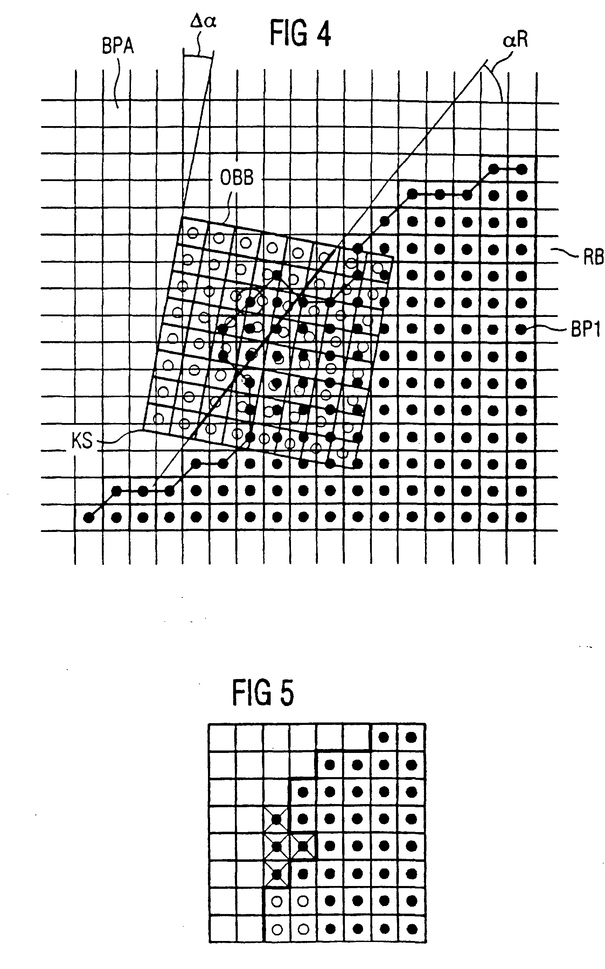

Diese Vorgehensweise ist für die Weiterbildung der Approximationsfunktion g als eine Gerade in Fig. 4 dargestellt.

Anschaulich bedeutet diese Vorgehensweise, daß der Originalbildblock OBB in das Referenzbild RB derart eingesetzt wird, daß die Approximationsfunktion g des Originalbildblocks OBB und die Approximationsfunktion g des Referenzbildes RB in etwa deckungsgleich sind. Die Abbildung erfolgt derart, daß Codierungsinformation von Bildpunkten des Referenzbildes RB auf die Bildpunkte des Originalbildblocks OBB abgebildet wird. Durch den Originalbildblock OBB wird ein neues Koordinatensystem KS gebildet, in dem diejenigen Bildpunkte BP des Referenzbildes RB, die innerhalb des Originalbildblocks OBB liegen, mit Hilfe eines bekannten Interpolationsverfahrens, beispielsweise einer linearen Interpolation oder eines beliebigen Filterverfahrens, z. B. eines Tiefpaßfilterverfahrens, interpoliert werden. Auch die Interpolation sollte bei der Bildcodierung und bei der Bilddecodierung in gleicher Weise erfolgen.

Da die Form des Bildobjektes BO in dem Originalbildblock OBB und in dem Referenzbild RB üblicherweise nicht identisch sind, ist es in einer Weiterbildung des Verfahrens vorgesehen, Bildpunkte BP, die nicht in beiden Bildern OB, RB in dem Bildobjekt BO enthalten sind, in besonderer Weise zu behandeln. So ist es beispielsweise in einer Weiterbildung vorgesehen, Bildpunkten BP, die zwar in dem Bildobjekt BO des Originalbildblocks OBB enthalten sind, aber nicht in dem Bildobjekt BO des Referenzbildes RB der Codierungsinformation des jeweiligen Bildpunktes BP einen vorgebbaren Wert zuzuordnen.

Ferner ist es beispielsweise in einer Variante vorgesehen, Bildpunkte BP, die zwar in dem Bildobjekt BO des Referenzbildes RB, nicht jedoch in dem Bildobjekt BO des Originalbildblocks OBB enthalten sind, ebenfalls mit einem vorgebbaren Wert zu belegen. Die Zuordnung kann z. B. jeweils mit einem konstanten Wert der Codierungsinformation erfolgen oder auch durch eine Extrapolation der mit Codierungsinformation belegten Werten der Bildpunkte BP der Bildobjekte BO.

Allgemein kann diese Berücksichtigung der Unterschiede der Form der Bildobjekte BO auch durch eine vorgebbare konforme Abbildung der Codierungsinformation von dem Bildobjekt BO des Originalbildblocks OBB auf das Bildobjekt BO des Referenzbildes RB erfolgen. Bei der konformen Abbildung wird in einer vorgegebenen Weise das Gebiet des Bildobjekts BO des Referenzbildes RB auf das Gebiet des Bildobjekts BO im Originalbildblock OB abgebildet.

Durch diese Vorgehensweise wird ein Referenzbildblock RBB ermittelt, für den in einer Weiterbildung des Verfahrens eine Blockdifferenz BD ermittelt wird, beispielsweise durch Bildung der Summe der absoluten Differenzen zwischen der Codierungsinformation der jeweiligen Bildpunkte des Referenzbildblocks RBB und des Originalbildblocks OBB oder auch unter Verwendung der Summe der quadratischen Differenz der Codierungsinformation der Bildpunkte.

In einer Weiterbildung des Verfahrens ist es vorgesehen, das Verfahren für eine beliebige Anzahl von Suchpositionen S und somit für eine beliebige Anzahl von zu bildenden Referenzbildblöcken RBB durchzuführen und denjenigen Referenzbildblock RBB auszuwählen, bei dem eine optimale Blockdifferenz BD bezüglich eines vorgebbaren Bewertungskriteriums, beispielsweise dem Minimum der Blockdifferenz BD, ermittelt wird.

Weiterhin ist in einer Weiterbildung vorgesehen, zu Beginn des Verfahrens Bildpunkten BPA des Originalbildblocks OBB, die sich nicht in dem Bildobjekt BO befinden, einen vorgebbaren Wert zuzuweisen. Dieser muß wiederum nicht konstant sein, sondern kann beispielsweise durch beliebige Extrapolation der Codierungsinformation der Bildpunkte BPI, die sich in dem Bildobjekt BO befinden, erfolgen.

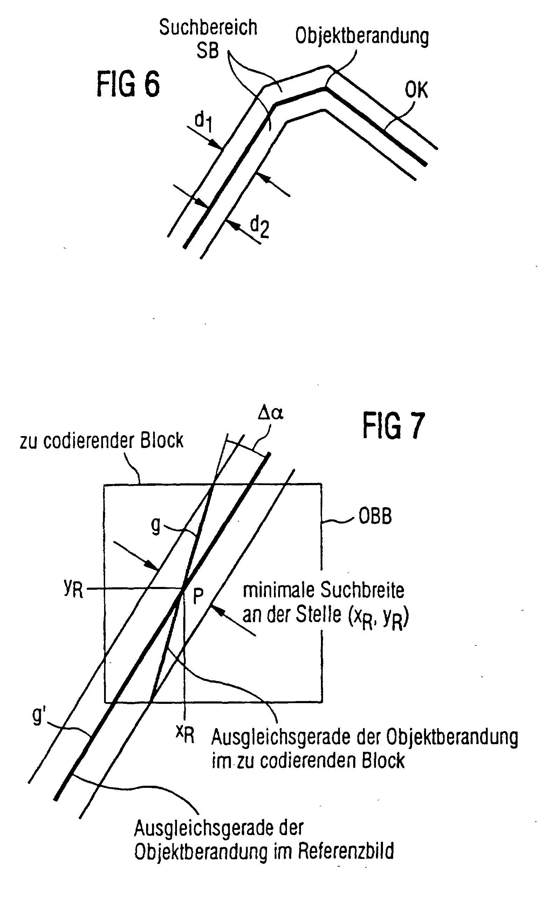

Ebenso ist es in einer Weiterbildung vorgesehen, Bildpunkten BP des Referenzbildes RB, die sich nicht im Bildobjekt BO befinden (in Figur 5 mit einem X markiert), einen vorgebbaren Wert zuzuweisen, beispielsweise einen konstanten Wert oder auch einen durch eine beliebige Extrapolation der Codierungsinformation von Bildpunkten, die sich in dem Bildobjekt BO befinden, erhaltenen Wert (vgl. Figur 5).

Ferner ist es in einer Variante des Verfahrens vorgesehen, bei der Bildung der Blockdifferenz BD diejenigen Bildpunkte nicht zu berücksichtigen, die in einem der Bildobjekte BO, dem Bildobjekt BO des Originalbildblocks OBB oder dem Bildobjekt BO des Referenzbildes RB nicht vorkommt.

Ferner ist es in einer Weiterbildung des Verfahrens vorgesehen, daß sich die Suchpositionen S nur innerhalb eines vorgebbaren Suchbereichs SB (vgl. Figur 6) in dem Referenzbild RB befinden. Durch diese Weiterbildung wird der benötigte Rechenzeitbedarf zur Durchführung des Verfahrens mittels eines Rechners R1, R2 reduziert.

Eine weitere Reduktion des Rechenzeitbedarfs wird dadurch erreicht, daß die Bewegungsschätzung bzw. die Bewegungskompensation in einem Suchbereich SB erfolgt, der im wesentlichen einem Bereich vorgebbarer Größe entlang der Objektkante OK des Bildobjekts BO in dem Referenzbild RB entspricht. Auf diese Weise wird die Konturinformation zur Einschränkung des Suchbereichs SB für die Bewegungsschätzung bzw. die Bewegungskompensation verwendet, wodurch eine erhebliche Reduktion des benötigten Rechenzeitbedarfs erreicht wird.

Dies ist in Fig. 6 dargestellt. Der Suchbereich SB ergibt sich entlang der Objektkante OK des Bildobjekts BO, wobei die Breite des Suchbereichs SB sich ergibt aus zwei vorgebbaren Abständen $d_1$ und $d_2$ jeweils von der Objektkante OK. Es werden die Suchpositionen S innerhalb des Suchbereichs SB bestimmt. Suchpositionen S außerhalb des Suchbereichs SB, der durch einen ersten Abstand $d_1$ und einem zweiten Abstand $d_2$ ausgehend von der Objektkante OK begrenzt wird, wird im Rahmen der Bewegungsschätzung bzw. der Bewegungskompensation nicht berücksichtigt.

Die Breite d des Suchbereichs SB, die sich aus der Summe des ersten Abstands $d_1$ und dem zweiten Abstand $d_2$ ergibt ($d = d_1 + d_2$), muß aber nicht konstant sein.

Es ist in einer Variante des Verfahrens ebenso vorgesehen, daß die Breite d des Suchbereichs SB variabel ausgestaltet ist. Beispielsweise kann die Breite des Suchbereichs SB an die Größe der relativen Orientierung $\Delta\alpha$ angepaßt sein. Ist in diesem Fall die relative Orientierung $\Delta\alpha$ klein, so stimmen die erste Orientierung $\alpha_O$ und die zweite Orientierung $\alpha_R$ gut überein und der Suchbereich SB kann relativ klein sein, beispielsweise +/-1 oder +/-2 Bildpunktabstände.

Eine Abhängigkeit des Suchbereichs SB von der relativen Orientierung $\Delta\alpha$ ist in Fig. 7 skizziert.

Die Approximationsfunktion g des Originalbildblocks OB und die Approximationsfunktion g' der Objektkante OK des Referenzbildes RB schneiden sich in einem 2-dimensionalen Punkt P mit einer ersten Komponente $y_R$ und mit einer zweiten Komponente $x_R$. An dem Punkt P ergibt sich die minimale Breite d des Suchbereichs SB.

Aus den geometrischen Beziehungen ergibt sich für die Bestimmung der Breite d des Suchbereichs SB:

$$d \geq L \cdot \tan\text{-}|\Delta\alpha|,$$

wobei mit L die Kantenlänge L der Approximationsfunktion g im Originalbildblock OBB bezeichnet wird.

Ferner ist es in einer Weiterbildung vorgesehen, den Suchbereich SB abhängig von der relativen Orientierung $\Delta\alpha$ einzuschränken, da ohne Berücksichtigung von Rotationsparametern in diesem Fall keine gute bewegungskompensierte Prädiktion möglich ist. Dies führt dazu, daß ein Referenzbildblock RBB nur dann im Verfahren zur Bewegungsschätzung bzw. zur Bewegungskompensation berücksichtigt wird, wenn die relative Orientierung $\Delta\alpha$ des Referenzbildblocks RBB kleiner ist als eine vorgebbare Schranke.

Ferner ist es in einer Weiterbildung vorgesehen, daß für einen Originalbildblock OBB, der vollständig innerhalb eines Bildobjekts BO liegt, der Suchbereich SB im Referenzbild RB durch die Objektkante OK des Bildobjekts BO eingeschränkt wird. Dabei ist es in einer Variante vorgesehen, den Suchbereich SB um einige Bildpunktabstände über die Objektkante OK hinaus auszudehnen, beispielsweise bei Aufdeckungen durch ein anderes Bildobjekt BO, und die fehlenden Bildpunkte BP zur Prädiktion durch Extrapolation der Codierungsinformation aus der vorhandenen Codierungsinformation der vorhandenen Bildpunkten BP zu gewinnen.

Im Rahmen dieses Dokuments wurden folgende Veröffentlichungen zitiert:

[1] US 5 638 129

[2] EP 0 691 789 A2

**Patentansprüche**

1. Verfahren zur rechnergestützten Bewegungsschätzung oder Bewegungskompensation in einem digitalisierten Originalbild (OB) unter Verwendung eines digitalisierten Referenzbilds (RB), welche jeweils Bildblöcke (BB) enthalten, die jeweils eine beliebige Anzahl Bildpunkte (BP) aufweisen,

  - bei dem das Originalbild (OB) und das Referenzbild (RB) jeweils mindestens ein Bildobjekt (BO) aufweisen,
  - bei dem die Bildobjekte (BO) eine beliebige Form und eine beliebige Anzahl von Bildpunkten (BP) aufweisen,
  - bei dem die Form der Bildobjekte (BO) unter Verwendung einer Konturinformation beschrieben wird,
  - bei dem die Bewegungsschätzung oder die Bewegungskompensation für einen Originalbildblock (OBB) des Originalbilds (OB) bezüglich des Referenzbilds (RB) erfolgt,
  - bei dem bei der Bewegungsschätzung oder bei der Bewegungskompensation die Konturinformation zur Beschreibung der Form der Bildobjekte (BO) berücksichtigt wird, und
  - bei dem für mindestens einen Originalbildblock (OBB), der zumindest einen Teil einer Objektkante (OK) des Bildobjekts (BO) des Originalbilds (OB) aufweist, folgende Schritte durchgeführt werden:

    -- für den Teil der Objektkante (OK) wird eine Kantenlänge (L) der Objektkante (OK) in dem Originalbildblock (OBB) ermittelt,
    -- es wird in dem Referenzbild (RB) mindestens eine Suchposition bestimmt,
    -- es wird in dem Referenzbild (RB) ein Teil einer Objektkante (OK) der Kantenlänge (L) in dem Referenzbild (RB) bestimmt, wobei die Suchposition auf dem Teil der Objektkante (OK) in dem Referenzbild (RB) liegt,
    -- es wird eine relative Orientierung ($\Delta\alpha$) ermittelt, mit der eine unterschiedliche Orientierung der Objektkante (OK) eines Bildblocks in dem Referenzbild (RB) und der Objektkante (OK) in dem Originalbildblock (OBB) beschrieben wird,
    -- es wird der Originalbildblock (OBB), gedreht um die relative Orientierung ($\Delta\alpha$), auf den Bildblock abgebildet, und
    -- die Abbildung erfolgt derart, daß Codierungsinfomation von Bildpunkten (BP) des Bildblocks in dem Referenzbild (RB) auf Codierungsinfomation von Bildpunkten (BP) eines möglichen Referenzbildblocks (RBB) abgebildet wird.

2. Verfahren nach Anspruch 1, bei dem die Objektkante (OK) in dem Originalbild (OB) und die Objektkante (OK) in dem Referenzbild (OB) in etwa die gleiche Form aufweisen.

3. Verfahren nach Anspruch 2, bei dem die Objektkante (OK) in dem Originalbild (OB) und die Objektkante (OK) in dem Referenzbild (OB) bei der Abbildung der Codierungsinformation in etwa deckungsgleich sind.

4. Verfahren nach Anspruch 2 oder 3, bei dem die Objektkante (OK) in dem Originalbild (OB) und die Objektkante (OK) in dem Referenzbild (OB) durch jeweils eine Kantenapproximationsfunktion angenähert werden.

5. Verfahren nach einem der Ansprüche 1 bis 4,

  - bei dem das Verfahren für mehrere Bildblöcke in dem Referenzbild (RB) durchgeführt wird,
  - bei dem eine Blockdifferenz (BD) zwischen der abgebildeten Codierungsinformation und der Codierungsinformation des Originalbildblocks (OBB) ermittelt wird, und
  - bei dem derjenige Bildblock als Referenzbildblock (RBB) ausgewählt wird, der eine optimale Blockdifferenz (BD) bezüglich eines vorgebbaren Bewertungskriteriums aufweist.

6. Verfahren nach einem der Ansprüche 1 bis 5, bei dem die Abbildung derart erfolgt, daß eine konforme Abbildung Codierungsinfomation von Bildpunkten (BP) des Bildblocks im Referenzbild (RB) auf Codierungsinformation von Bildpunkten (BP) eines möglichen Referenzbildblocks (RBB) durchgeführt wird.

7. Verfahren nach einem der Ansprüche 1 bis 6, bei dem bei der Abbildung zwischen der Codierungsinformation der Bildpunkte (BP) des Bildblocks im Referenzbild (RB) und der Codierungsinformation der Bildpunkte (BP) eines möglichen Referenzbildblocks (RBB) eine Interpolation durchge-

**8.** Verfahren nach einem der Ansprüche 1 bis 7, bei dem die Abbildung derart erfolgt, daß der Codierungsinformation eines Bildpunkts (BP), der sich innerhalb des Bildobjekts (BO) des Originalbilds (OB) aber nicht innerhalb des Bildobjekts (BO) des Referenzbilds (RB) befindet, ein vorgebbarer Wert zugewiesen wird.

**9.** Verfahren nach einem der Ansprüche 1 bis 8, bei dem die Abbildung derart erfolgt, daß der Codierungsinformation eines Bildpunkts (BP), der sich innerhalb des Bildobjekts (BO) des Referenzbilds (RB) aber nicht innerhalb des Bildobjekts (BO) des Originalbilds (OB) befindet, ein vorgebbarer Wert zugewiesen wird.

**10.** Verfahren nach einem der Ansprüche 5 bis 7, bei dem Codierungsinformation eines Bildpunkts (BP), der sich innerhalb des Bildobjekts (BO) des Originalbilds (OB) aber nicht innerhalb des Bildobjekts (BO) des Referenzbilds (RB) befindet, oder Codierungsinformation eines Bildpunkts (BP), der sich innerhalb des Bildobjekts (BO) des Referenzbilds (RB) aber nicht innerhalb des Bildobjekts (BO) des Originalbilds (OB) befindet, bei der Ermittlung der Blockdifferenz (BD) nicht berücksichtigt wird.

**11.** Verfahren nach einem der Ansprüche 1 bis 10, bei dem der Codierungsinformation von Bildpunkten (BP) des Originalbildblocks (OBB) und/oder Bildpunkten (BP) des Bildblocks die sich nicht innerhalb des Bildojekts (BO) befinden, jeweils ein vorgebbarer Wert zugewiesen wird.

**12.** Verfahren nach einem der Ansprüche 1 bis 11,

- bei dem in dem Referenzbild (RB) mindestens eine Suchposition bestimmt wird,
- bei dem die Suchposition sich nur innerhalb eines vorgebbaren Suchbereichs in dem Referenzbild (RB) befindet.

**13.** Verfahren nach einem der Ansprüche 1 bis 12, bei dem als Suchbereich im wesentlichen die Objektkante (OK) des Bildobjekts (BO) in dem Referenzbild (RB) verwendet wird.

**14.** Verfahren nach einem der Ansprüche 1 bis 13, bei dem ein Bildblock nur dann im Verfahren berücksichtigt wird, wenn die relative Orientierung ($\Delta\alpha$) des Bildblocks kleiner ist als eine vorgebbare Schranke.

**15.** Anordnung zur rechnergestützten Bewegungsschätzung oder Bewegungskompensation in einem digitalisierten Originalbild (OB) unter Verwendung eines digitalisierten Referenzbilds (RB), welche jeweils Bildblöcke (BB) enthalten, die jeweils eine beliebige Anzahl Bildpunkte (BP) aufweisen,

- mit einer Prozessoreinheit, die derart eingerichtet ist, daß folgende Verfahrensschritte durchgeführt werden:

-- das Originalbild (OB) und das Referenzbild (RB) weisen jeweils mindestens ein Bildobjekt (BO) auf,
-- die Bildobjekte (BO) weisen eine beliebige Form und eine beliebige Anzahl von Bildpunkten (BP) auf,
-- die Form der Bildobjekte (BO) wird unter Verwendung einer Konturinformation beschrieben,
-- die Bewegungsschätzung oder die Bewegungskompensation für einen Originalbildblock (OBB) des Originalbilds (OB) erfolgt bezüglich des Referenzbilds (RB),
-- bei der Bewegungsschätzung oder bei der Bewegungskompensation wird die Konturinformation zur Beschreibung der Form der Bildobjekte (BO) berücksichtigt, und
-- für mindestens einen Originalbildblock (OBB), der zumindest einen Teil einer Objektkante (OK) des Bildobjekts (BO) des Originalbilds (OB) aufweist, werden folgende Schritte durchgeführt:

--- für den Teil der Objektkante (OK) wird eine Kantenlänge (L) der Objektkante (OK) in dem Originalbildblock (OBB) ermittelt,
--- es wird in dem Referenzbild (RB) mindestens eine Suchposition bestimmt,
--- es wird in dem Referenzbild (RB) ein Teil einer Objektkante (OK) der Kantenlänge (L) in dem Referenzbild (RB) bestimmt, wobei die Suchposition auf dem Teil der Objektkante (OK) in dem Referenzbild (RB) liegt,
--- es wird eine relative Orientierung ($\Delta\alpha$) ermittelt, mit der eine unterschiedliche Orientierung der Objektkante (OK) eines Bildblocks in dem Referenzbild (RB) und der Objektkante (OK) in dem Originalbildblock (OBB) beschrieben wird,
--- es wird der Originalbildblock (OBB), gedreht um die relative Orientierung ($\Delta\alpha$), auf den Bildblock abgebildet, und
--- die Abbildung erfolgt derart, daß Codierungsinfomation von Bildpunkten (BP) des Bildblocks in dem Referenzbild (RB) auf Codierungsinformation von Bildpunkten (BP) eines möglichen Referenzbildblocks (RBB) abgebildet wird, und

- mit einem Bildspeicher, in dem digitalisierte Bilder gespeichert werden.

16. Anordnung nach Anspruch 15,
bei der eine Kamera vorgesehen ist zur Aufnahme der Bilder.

17. Anordnung zur Bildcodierung mit einer Anordnung nach Anspruch 15 oder 16.

18. Anordnung zur Bilddecodierung mit einer Anordnung nach Anspruch 15 oder 16.

**Claims**

1. Method for computer-aided motion estimation or motion compensation in a digitized original image (OB) using a digitized reference image (RB), which each contain image blocks (BB) each having an arbitrary number of pixels (BP),

    - in which the original image (OB) and the reference image (RB) each have at least one image object (BO),
    - in which the image objects (BO) have an arbitrary form and an arbitrary number of pixels (BP),
    - in which the form of the image objects (BO) is described using an item of contour information,
    - in which the motion estimation or the motion compensation for an original image block (OBB) of the original image (OB) is effected with regard to the reference image (RB),
    - in which the contour information for describing the form of the image objects (BO) is taken into account during the motion estimation or during the motion compensation, and
    - in which, for at least one original image block (OBB) which has at least a portion of an object edge (OK) of the image object (BO) of the original image (OB), the following steps are carried out:

        -- for the portion of the object edge (OK), an edge length (L) of the object edge (OK) in the original image block (OBB) is determined,
        -- at least one search position is determined in the reference image (RB),
        -- in the reference image (RB), a portion of an object edge (OK) of the edge length (L) in the reference image (RB) is determined, the search position lying on the portion of the object edge (OK) in the reference image (RB),

age (RB),

        -- a relative orientation ($\Delta\alpha$) is determined which describes a different orientation of the object edge (OK) of an image block in the reference image (RB) and of the object edge (OK) in the original image block (OBB),
        -- the original image block (OBB), rotated by the relative orientation ($\Delta\alpha$), is mapped onto the image block, and
        -- the mapping is effected in such a way that coding information of pixels (BP) of the image block in the reference image (RB) is mapped onto coding information of pixels (BP) of a possible reference image block (RBB).

2. Method according to Claim 1,
in which the object edge (OK) in the original image (OB) and the object edge (OK) in the reference image (RB) have approximately the same form.

3. Method according to Claim 2,
in which the object edge (OK) in the original image (OB) and the object edge (OK) in the reference image (RB) are approximately congruent during the mapping of the coding information.

4. Method according to Claim 2 or 3,
in which the object edge (OK) in the original image (OB) and the object edge (OK) in the reference image (RB) are approximated by an edge approximation function in each case.

5. Method according to one of Claims 1 to 4,

    - in which the method is carried out for a plurality of image blocks in the reference image (RB),
    - in which a block difference (BD) between the mapped coding information and the coding information of the original image block (OBB) is determined, and
    - in which that image block which has an optimum block distance (BD) with regard to a predeterminable assessment criterion is selected as the reference image block (RBB).

6. Method according to one of Claims 1 to 5,
in which the mapping is effected in such a way that a conformal mapping of coding information of pixels (BP) of the image block in the reference image (RB) onto coding information of pixels (BP) of a possible reference image block (RBB) is carried out.

7. Method according to one of Claims 1 to 6,
in which an interpolation is carried out during the mapping between the coding information of the pixels (BP) of the image block in the reference image (RB) and the coding information of the pixels (BP) of a possible reference image block (RBB).

8. Method according to one of Claims 1 to 7, in which the mapping is effected in such a way that a predeterminable value is allocated to the coding information of a pixel (BP) which is situated within the image object (BO) of the original image (OB), but not within the image object (BO) of the reference image (RB).

9. Method according to one of Claims 1 to 8, in which the mapping is effected in such a way that a predeterminable value is allocated to the coding information of a pixel (BP) which is situated within the image object (BO) of the reference image (RB), but not within the image object (BO) of the original image (OB).

10. Method according to one of Claims 5 to 7, in which coding information of a pixel (BP) which is situated within the image object (BO) of the original image (OB) but not within the image object (BO) of the reference image (RB), or coding information of a pixel (BP) which is situated within the image object (BO) of the reference image (RB) but not within the image object (BO) of the original image (OB), is not taken into account during the determination of the block difference (BD).

11. Method according to one of Claims 1 to 10, in which a predeterminable value is in each case allocated to the coding information of pixels (BP) of the original image block (OBB) and/or pixels (BP) of the image block which are not situated within the image object (BO).

12. Method according to one of Claims 1 to 11,

   - in which at least one search position is determined in the reference image (RB),
   - in which the search position is situated only within a predeterminable search area in the reference image (RB).

13. Method according to one of Claims 1 to 12, in which the search area used is essentially the object edge (OK) of the image object (BO) in the reference image (RB).

14. Method according to one of Claims 1 to 13, in which an image block is taken into account in the method only when the relative orientation ($\Delta\alpha$) of the image block is smaller than a predeterminable limit.

15. Arrangement for computer-aided motion estimation or motion compensation in a digitized original image (OB) using a digitized reference image (RB), which each contain image blocks (BB) each having an arbitrary number of pixels (BP),

   - having a processor unit which is set up in such a way that the following method steps are carried out:

      -- the original image (OB) and the reference image (RB) each have at least one image object (BO),
      -- the image objects (BO) have an arbitrary form and an arbitrary number of pixels (BP),
      -- the form of the image objects (BO) is described using an item of contour information,
      -- the motion estimation or the motion compensation for an original image block (OBB) of the original image (OB) is effected with regard to the reference image (RB),
      -- the contour information for describing the form of the image objects (BO) is taken into account during the motion estimation or during the motion compensation, and
      -- for at least one original image block (OBB) which has at least a portion of an object edge (OK) of the image object (BO) of the original image (OB), the following steps are carried out:

         --- for the portion of the object edge (OK), an edge length (L) of the object edge (OK) in the original image block (OBB) is determined,
         --- at least one search position is determined in the reference image (RB),
         --- in the reference image (RB), a portion of an object edge (OK) of the edge length (L) in the reference image (RB) is determined, the search position lying on the portion of the object edge (OK) in the reference image (RB),
         --- a relative orientation ($\Delta\alpha$) is determined which describes a different orientation of the object edge (OK) of an image block in the reference image (RB) and of the object edge (OK) in the original image block (OBB),
         --- the original image block (OBB), rotated by the relative orientation ($\Delta\alpha$), is mapped onto the image block, and
         --- the mapping is effected in such a way that coding information of pixels (BP) of the image block in the reference image (RB) is mapped onto coding information of pixels (BP) of a possible reference image block (RBB), and

- having an image memory in which digitized images are stored.

**16.** Arrangement according to Claim 15,
in which a camera is provided for recording the images.

**17.** Arrangement for image coding having an arrangement according to Claim 15 or 16.

**18.** Arrangement for image decoding having an arrangement according to Claim 15 or 16.


**Revendications**

**1.** Procédé pour l'estimation de mouvement ou la compensation de mouvement dans une image originale numérisée (OB) en utilisant une image de référence numérisée (RB), lesquelles images contiennent respectivement des blocs d'image (BB) qui comportent respectivement un nombre quelconque de points d'image (BP),

- dans lequel l'image originale (OB) et l'image de référence (RB) comportent respectivement au moins un objet d'image (BO),
- dans lequel les objets d'image (BO) ont une forme quelconque et un nombre quelconque de points d'image (BP),
- dans lequel on décrit la forme des objets d'image (BO) en utilisant une information de contour,
- dans lequel l'estimation de mouvement ou la compensation de mouvement s'effectue pour un bloc d'image originale (OBB) de l'image originale (OB) par rapport à l'image de référence (RB),
- dans lequel on prend en compte lors de l'estimation de mouvement ou de la compensation de mouvement l'information de contour pour la description de la forme des objets d'image (BO), et
- dans lequel on met en oeuvre, pour au moins un bloc d'image originale (OBB) qui comporte au moins une partie d'un bord d'objet (OK) de l'objet d'image (BO) de l'image originale (OB), les étapes suivantes :

-- on détermine pour la partie du bord d'objet (OK) une longueur de bord (L) du bord d'objet (OK) dans le bloc d'image originale (OBB),
-- on détermine dans l'image de référence (RB) au moins une position de recherche,
-- on détermine dans l'image de référence (RB) une partie d'un bord d'objet (OK) de la longueur de bord (L) dans l'image de référence (RB), la position de recherche se trouvant sur la partie du bord d'objet (OK) dans l'image de référence (RB),
-- on détermine une orientation relative ($\Delta\alpha$) avec laquelle on décrit une orientation différente du bord d'objet (OK) d'un bloc d'image dans l'image de référence (RB) et du bord d'objet (OK) dans le bloc d'image originale (OBB),
-- on projette le bloc d'image originale (OBB), tourné de l'orientation relative ($\Delta\alpha$), sur le bloc d'image, et
-- on effectue la projection de telle sorte que l'information de codage de points d'image (BP) du bloc d'image dans l'image de référence (RB) est projetée sur l'information de codage de points d'image (BP) d'un bloc d'image de référence (RBB) possible.

**2.** Procédé selon la revendication 1, dans lequel le bord d'objet (OK) dans l'image originale (OB) et le bord d'objet (OK) dans l'image de référence (RB) ont sensiblement la même forme.

**3.** Procédé selon la revendication 2, dans lequel le bord d'objet (OK) dans l'image originale (OB) et le bord d'objet (OK) dans l'image de référence (RB) coïncident sensiblement lors de la projection de l'information de codage.

**4.** Procédé selon la revendication 2 ou 3, dans lequel on approche le bord d'objet (OK) dans l'image originale (OB) et le bord d'objet (OK) dans l'image de référence (RB) respectivement par une fonction d'approximation de bord.

**5.** Procédé selon l'une des revendications 1 à 4,

- dans lequel on met en oeuvre le procédé pour plusieurs blocs d'image dans l'image de référence (RB),
- dans lequel on détermine une différence de bloc (BD) entre l'information de codage projetée et l'information de codage du bloc d'image originale (OBB), et
- dans lequel on sélectionne comme bloc d'image de référence (RBB) le bloc d'image qui a une différence de bloc (BD) optimale par rapport à un critère d'évaluation pouvant être prescrit.

**6.** Procédé selon l'une des revendications 1 à 5, dans lequel une projection s'effectue de telle sorte qu'on effectue une projection conforme information de codage de points d'image (BP) du bloc d'image dans l'image de référence (RB) sur information de codage de points d'image (BP) d'un bloc d'image de référence (RBB) possible.

**7.** Procédé selon l'une des revendications 1 à 6, dans lequel on effectue une interpolation lors de la projection entre l'information de codage des points d'image (BP) du bloc d'image dans l'image de référence (RB) et l'information de codage des points d'image (BP) d'un bloc d'image de référence (RBB) possible.

8. Procédé selon l'une des revendications 1 à 7, dans lequel la projection s'effectue de telle sorte qu'on attribue une valeur pouvant être prescrite à l'information de codage d'un point d'image (BP) qui se trouve à l'intérieur de l'objet d'image (BO) de l'image originale (OB) mais pas à l'intérieur de l'objet d'image (BO) de l'image de référence (RB).

9. Procédé selon l'une des revendications 1 à 8, dans lequel la projection s'effectue de telle sorte qu'on attribue une valeur pouvant être prescrite à l'information de codage d'un point d'image (BP) qui se trouve à l'intérieur de l'objet d'image (BO) de l'image de référence (RB) mais pas à l'intérieur de l'objet d'image (BO) de l'image originale (OB).

10. Procédé selon l'une des revendications 5 à 7, dans lequel on ne prend pas en compte lors de la détermination de la différence de bloc (BD) une information de codage d'un point d'image (BP) qui se trouve à l'intérieur de l'objet d'image (BO) de l'image originale (OB) mais pas à l'intérieur de l'objet d'image (BO) de l'image de référence (RB) ou une information de codage d'un point d'image (BP) qui se trouve à l'intérieur de l'objet d'image (BO) de l'image de référence (RB) mais pas à l'intérieur de l'objet d'image (BO) de l'image originale (OB).

11. Procédé selon l'une des revendications 1 à 10, dans lequel on attribue à chaque fois une valeur pouvant être prescrite à l'information de codage de points d'image (BP) du bloc d'image originale (OBB) et/ou de points d'image (BP) du bloc d'image qui ne se trouvent pas à l'intérieur de l'objet d'image (BO).

12. Procédé selon l'une des revendications 1 à 11,

    - dans lequel on détermine dans l'image de référence (RB) au moins une position de recherche, et
    - dans lequel la position de recherche se trouve seulement à l'intérieur d'une zone de recherche pouvant être prescrite dans l'image de référence (RB).

13. Procédé selon l'une des revendications 1 à 12, dans lequel on utilise comme zone de recherche globalement le bord d'objet (OK) de l'objet d'image (BO) dans l'image de référence (RB).

14. Procédé selon l'une des revendications 1 à 13, dans lequel on ne prend en compte un bloc d'image dans le procédé que si l'orientation relative ($\Delta\alpha$) du bloc d'image est inférieure à une limite pouvant être prescrite.

15. Dispositif pour l'estimation de mouvement ou la compensation de mouvement assistée par ordinateur dans une image originale numérisée (OB) en utilisant une image de référence numérisée (RB), lesquelles images contiennent à chaque fois des blocs d'image (BB) qui comportent à chaque fois un nombre quelconque de points d'image (BP),

    - avec une unité à processeur qui est construite de telle sorte que les étapes de procédé suivantes sont mises en oeuvre :

        -- l'image originale (OB) et l'image de référence (RB) comportent respectivement au moins un objet d'image (BO),
        -- les objets d'image (BO) ont une forme quelconque et un nombre quelconque de points d'image (BP),
        -- la forme des objets d'image (BO) est décrite en utilisant une information de contour,
        -- l'estimation de mouvement ou la compensation de mouvement s'effectue pour un bloc d'image originale (OBB) de l'image originale (OB) par rapport à l'image de référence (RB),
        -- lors de l'estimation de mouvement ou de la compensation de mouvement, l'information de contour pour la description de la forme des objets d'image (BO) est prise en compte, et
        -- pour au moins un bloc d'image originale (OBB) qui comporte au moins une partie d'un bord d'objet (OK) de l'objet d'image (BO) de l'image originale (OB), les étapes suivantes sont mises en oeuvre :

            --- pour la partie du bord d'objet (OK), une longueur de bord (L) du bord d'objet (OK) dans le bloc d'image originale (OBB) est déterminée,
            --- dans l'image de référence (RB), au moins une position de recherche est déterminée,
            --- dans l'image de référence (RB), une partie d'un bord d'objet (OK) de la longueur de bord (L) dans l'image de référence (RB) est déterminée, la position de recherche se trouvant sur la partie du bord d'objet (OK) dans l'image de référence (RB),
            --- une orientation relative ($\Delta\alpha$) avec laquelle est décrite une orientation différente du bord d'objet (OK) d'un bloc d'image dans l'image de référence (RB) et du bord d'objet (OK) dans le bloc d'image originale (OBB) est déterminée,

--- le bloc d'image originale (OBB), tourné de l'orientation relative ($\Delta\alpha$), est projeté sur le bloc d'image, et

--- la projection est effectuée de telle sorte que l'information de codage de points d'image (BP) du bloc d'image dans l'image de référence (RB) est projetée sur l'information de codage de points d'image (BP) d'un bloc d'image de référence (RBB) possible, et

- avec une mémoire d'images dans laquelle sont mémorisées des images numérisées.

16. Dispositif selon la revendication 15, dans lequel une caméra est prévue pour enregistrer les images.

17. Dispositif pour le codage d'image avec un dispositif selon la revendication 15 ou 16.

18. Dispositif pour le décodage d'image avec un dispositif selon la revendication 15 ou 16.

# FIG 1

K

B

R1

BU

P     SP

ÜM

R2

BU

SP     P

# FIG 2

BPA     OK     α0

OB

BO

BPI

OBB     g

## FIG 3

EP 0 939 938 B1

## FIG 4

## FIG 5

16

**FIG 6**

Suchbereich SB   Objektberandung

$d_1$

$d_2$

OK

**FIG 7**

$\Delta\alpha$

zu codierender Block

g

OBB

$y_R$

P

minimale Suchbreite an der Stelle $(x_R, y_R)$

g'

$x_R$   Ausgleichsgerade der Objektberandung im zu codierenden Block

Ausgleichsgerade der Objektberandung im Referenzbild